# EUROPEAN PATENT APPLICATION

(11) **EP 4 443 670 A1**
(43) Date of publication of application: **09.10.2024**
(21) Application number: 22897667.6
(22) Date of filing: 16.11.2022
(51) Int. Cl.: H01R 43/052, H01R 13/52, B60L 53/16, B60L 53/18

(54) **AUTOMOBILE CHARGING DEVICE AND MANUFACTURING METHOD**

(30) Priority: 29.11.2021 CN 202111436149
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/132176
(87) International publication number: WO 2023/093584

(57) **Abstract**

The present disclosure discloses an automobile charging device and a preparation method thereof. The automobile charging device includes a charging connector, a rear housing, and a cable. The charging connector includes a connecting portion, a first end of the rear housing is connected to the connecting portion, a second end of the rear housing is provided with a wire-through hole, the cable enters the rear housing through the wire-through hole and is connected to the charging connector, a protective portion is disposed outside the rear housing, and the protective portion at least wraps the rear housing therein. The automobile charging device charges an electric automobile through connection between the charging connector and the electric automobile, in which the cable enters the rear housing through the wire-through hole of the rear housing and is connected to the charging connector. And the wrapping of the protective portion achieves the water-proof sealing of a connection region between the cable and the rear housing. Further, the rear housing is provided so that the protective portion may be a hollow structure, thereby reducing the volume and weight of the protective portion, thus ensuring both the water-proof sealing performance and weight of the automobile charging device.

## Description

The present disclosure claims priority to Chinese Patent Application No. 202111436149.0, entitled "AUTOMOBILE CHARGING DEVICE AND PREPARATION METHOD THEREOF", and filed on November 29, 2021, which is hereby incorporated by reference in its entirety.

### TECHNICAL FIELD

The present disclosure relates to the technical field of new energy automobile, and in particular to an automobile charging device and a preparation method thereof.

### BACKGROUND

New energy automobiles continue to develop due to their characteristics of low carbon and environmentally friendly, and products such as charging guns and adaptors for new energy automobiles have become common. Currently, the charging guns on the market basically meet the charging needs of different new energy automobiles, but they still have some shortcomings.

Existing charging guns are typically first molded and then assembled with other parts, resulting in poor overall water-proof sealing performance. In addition, some charging gun products undergo integral plastic injection using an elastic material at the rear end thereof, thus achieving water-proof function. However, the use of a large amount of elastic material to fill the entire rear end of the charging gun results in large weight of the entire product, which makes the product inconvenient to use, and difficult to repair and maintain, leaving the entire product to be discarded. In other words, the current market lacks charging gun products that have good water-proof sealing performance and are designed lightweight. Therefore, a new solution is needed urgently to address the foregoing problems in the prior art.

### SUMMARY

The embodiments of the present disclosure provide an automobile charging device and a preparation method thereof, to resolve the problem that the existing automobile charging guns cannot ensure both the water-proof sealing performance and weight.

According to an aspect, the embodiments of the present disclosure provide an automobile charging device, including a charging connector, a rear housing, and a cable. The charging connector includes a connecting portion, a first end of the rear housing is connected to the connecting portion, a second end of the rear housing is provided with a wire-through hole, the cable enters the rear housing through the wire-through hole and is connected to the charging connector, a protective portion is disposed outside the rear housing, and the protective portion at least wraps the rear housing therein.

According to an aspect of the embodiments of the present disclosure, at least one wiring terminal is disposed in the charging connector, and the cable is electrically connected to the wiring terminal.

According to an aspect of the embodiments of the present disclosure, the first end of the rear housing is sleeved on an outer periphery of the connecting portion and is sealingly connected to the connecting portion.

According to an aspect of the embodiments of the present disclosure, the connecting portion is tubular, and the connecting portion is sleeved on an outer periphery of the rear housing and is sealingly connected to the rear housing.

According to an aspect of the embodiments of the present disclosure, an end face of the connecting portion is provided with a groove, and the first end of the rear housing is inserted into and sealingly connected to the groove.

According to an aspect of the embodiments of the present disclosure, the first end of the rear housing is provided with an internal thread or an external thread, the connecting portion is correspondingly provided with an external thread or an internal thread, and the rear housing is threadedly and sealingly connected to the connecting portion.

According to an aspect of the embodiments of the present disclosure, a wall thickness of the rear housing is 1 mm to 6 mm.

According to an aspect of the embodiments of the present disclosure, a ratio of a diameter of the wire-through hole to a diameter of the cable is 1:0.8 to 1:1.

According to an aspect of the embodiments of the present disclosure, a sealing ring is also included. The sealing ring is sleeved on the cable, and an outer periphery of the sealing ring is sealingly connected to the wire-through hole.

According to an aspect of the embodiments of the present disclosure, the sealing ring is made of an elastic material, the outer periphery of the sealing ring is provided with a sealing groove, and the wire-through hole is snap-fitted in the sealing groove.

According to an aspect of the embodiments of the present disclosure, the protective portion wraps the rear housing therein, and a first end of the protective portion abuts against an end face of the connecting portion.

According to an aspect of the embodiments of the present disclosure, the protective portion wraps the rear housing therein, and a first end of the protective portion wraps at least part of the connecting portion therein.

According to an aspect of the embodiments of the present disclosure, a second end of the protective portion is provided with an outward extending portion, and the outward extending portion covers the wire-through hole and an outer periphery of part of the cable.

According to an aspect of the embodiments of the present disclosure, a second end of the protective portion is provided with an outward extending portion, and the outward extending portion covers the wire-through hole, the sealing ring, and an outer periphery of part of the cable.

According to an aspect of the embodiments of the present disclosure, the protective portion is made of an elastic material.

According to an aspect of the embodiments of the present disclosure, a wall thickness of the protective portion is 1 mm to 6 mm.

According to another aspect, the embodiments of the present disclosure provide a preparation method of the automobile charging device described above, including:
step S 100: obtaining the charging connector, the rear housing, and the wiring terminal;
step S200: obtaining the cable and passing the cable through the wire-through hole;
step S300: connecting a conductive portion of the cable to the wiring terminal by crimping or welding;
step S400: assembling the wiring terminal with the charging connector;
step S500: connecting the first end of the rear housing to the connecting portion; and
step S600: placing the assembled charging connector, rear housing, and cable in a plastic injection mold, and forming the protective portion by integrated injection molding.

According to an aspect of the embodiments of the present disclosure, before the step S200, the method further includes step S 150: obtaining the cable and sleeving the cable with the sealing ring.

According to an aspect of the embodiments of the present disclosure, after the step S200 and before the step S300, the method further includes step S250: snap-fitting the wire-through hole in the sealing groove of the sealing ring.

The present disclosure has the following beneficial effects: The wrapping of the protective portion achieves the water-proof sealing of a connection region between the cable and the rear housing. And, the arrangement of the rear housing makes the protective portion a hollow structure, thereby reducing the volume and weight of the protective portion, thus reducing the weight of the entire automobile charging device. In addition, the sealing ring provided on the cable enhances the sealing with the rear housing. This meets the water-proof sealing requirement of the charging gun and avoids relatively large weight of the entire charging gun, and resolves the problem that the existing automobile charging guns cannot ensure both the water-proof sealing performance and weight. The arrangement of the outward extending portion can prevent the cable from obviously bending due to gravity, thus avoiding damage to the cable. The protective portion being made of the elastic material allows for certain deformation of the protective portion, such that it is suitable for more scenarios of charging electric automobiles which, for example, are in different models.

### BRIEF DESCRIPTION OF THE DRAWINGS

To describe the technical solutions in the embodiments of the present disclosure more clearly, the drawings to be used in the description of the embodiments or the prior art will be briefly described below. Obviously, the drawings described below are only some embodiments of the present disclosure. A person of ordinary skill in the art may further obtain accompanying drawings of other embodiments based on these drawings without inventive efforts.
FIG. 1 is a schematic structural exploded view of an automobile charging device at an angle of view according to an embodiment of the present disclosure.
FIG. 2 is a schematic structural exploded view of an automobile charging device at another angle of view according to an embodiment of the present disclosure.
FIG. 3 is a schematic structural assembly diagram of an automobile charging device according to an embodiment of the present disclosure.
FIG. 4 is a schematic structural diagram of a rear housing of an automobile charging device according to an embodiment of the present disclosure.
FIG. 5 is a schematic structural diagram of a sealing ring of an automobile charging device according to an embodiment of the present disclosure.

### Reference Numerals:

100. charging connector, 200. rear housing, 300. cable, 400. protective portion;
101. wiring terminal;
201. wire-through hole, 202. positioning portion;
301. sealing ring; 302. sealing groove; and
401. outward extending portion.

### DESCRIPTION OF THE EMBODIMENTS

The implementations of the present disclosure are further described below in detail with reference to the drawings and embodiments. The detailed description and drawings of the following embodiments are provided for illustratively describing the principles of the present disclosure, but they do not limit the scope of the present disclosure. The present disclosure is not limited to the described embodiments.

In the description of the present disclosure, it should be noted that, unless otherwise specified, terms such as "first" and "second" are used solely for descriptive purposes and should not be understood as indicating or implying relative importance. The term "a plurality of" means two or more. Terms such as "in", "out", "top", and "bottom" indicate the orientation or position relationships based on those of the drawings. These terms are merely intended to facilitate description of the present disclosure and simplify the description, rather than to indicate or imply that the mentioned device or element must have a specific orientation and must be constructed and operated in a specific orientation. Therefore, these terms should not be construed as a limitation to the present disclosure.

For ease of understanding, the use scenario of an automobile charging device in the embodiments of the present disclosure is described. The existing automobile charging device is typically in the form of a charging gun, and molded first and then combined with other parts, resulting in poor water-proof sealing performance. In addition, some charging gun products achieve water-proof function by encapsulating the rear end with an elastic material, but the encapsulated region is large, resulting in large weight of the entire product and inconvenient use.

Based on this, the embodiments of the present disclosure provide an automobile charging device, which has good water-proof sealing performance as well as light overall weight.

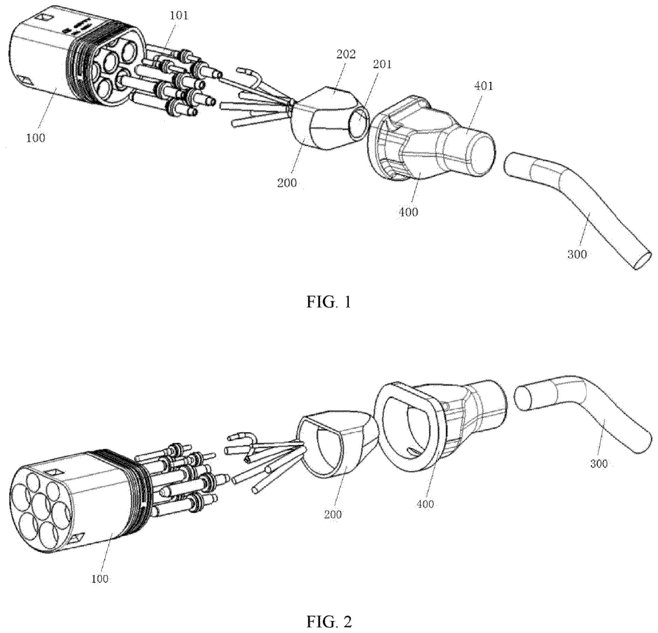

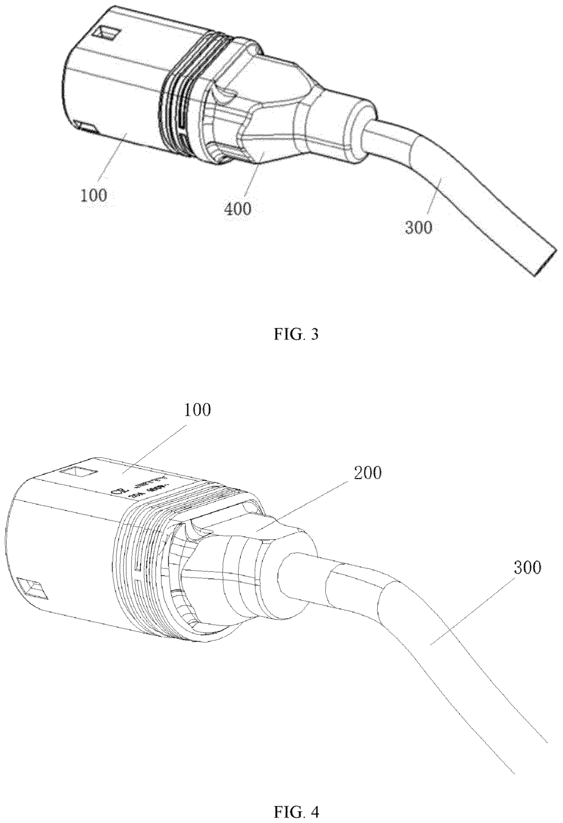

FIG. 1 is a schematic structural exploded view of an automobile charging device at an angle of view according to an embodiment of the present disclosure. FIG. 2 is a schematic structural exploded view of an automobile charging device at another angle of view according to an embodiment of the present disclosure. FIG. 3 is a schematic structural assembly diagram of an automobile charging device according to an embodiment of the present disclosure. Referring to FIGs. 1, 2 and 3, the embodiments of the present disclosure provide an automobile charging device, including a charging connector 100, a rear housing 200, and a cable 300. The charging connector 100 includes a connecting portion, a first end of the rear housing 200 is connected to the connecting portion, a second end of the rear housing 200 is provided with a wire-through hole 201, the cable 300 enters the rear housing 200 through the wire-through hole 201 and is connected to the charging connector 100, a protective portion 400 is disposed outside the rear housing 200, and the protective portion 400 at least wraps the rear housing 200 therein.

In this embodiment, the charging connector 100 is connected to the electric automobile, so as to charge the electric automobile. The cable 300 enters the rear housing 200 through the wire-through hole 201 of the rear housing 200 and is connected to the connecting portion of the charging connector 100. The protective portion 400 at least wraps the rear housing 200 therein, and may specifically wrap the second end of the rear housing 200 therein or the entire rear housing 200 therein, or the rear housing 200 wraps the connecting portion, thus achieving water-proof sealing of a connection region of the cable 300 to the rear housing 200 and the charging connector 100. In addition, the arrangement of the rear housing 200 makes the protective portion 400 a hollow structure, thereby reducing the weight of the protective portion 400, thus reducing the weight of the entire automobile charging device. This satisfies the water-proof sealing requirement of the charging gun and avoids the relatively large weight of the entire charging gun.

The protective portion 400 in this embodiment is provided with an accommodating space, and an inner contour shape of the protective portion 400 fits with an outer contour shape of the rear housing 200. The rear housing 200 is also provided with an accommodating space for accommodating the cable 300 and reducing its own weight. In addition, the volume of the protective portion 400 can be also reduced, thus reducing the weight of the protective portion 400, thereby making the entire automobile charging device less heavy.

In addition, the arrangement of the protective portion 400 achieves water-proof sealing of the automobile charging device, and enhances the safety of the automobile charging, while under no combination of other parts, allowing for a simple structure of the automobile charging device having the water-proof sealing performance. This can significantly reduce the costs of the automobile charging device, conducive to promoting the automobile charging device and the electric automobile.

In an optional embodiment, as shown in FIG. 1, at least one wiring terminal 101 is disposed in the charging connector 100, and an end of the cable 300 is electrically connected to the wiring terminal 101. Electrical connection to the charging element of the electric automobile is achieved through the wiring terminal 101. In a specific embodiment, after the cable 300 enters the rear housing 200 and is connected to the wiring terminal 101, the three are integrally assembled with the charging connector 100. Specifically, the wiring terminal 101 is inserted into the charging connector 100, the wiring terminal 101 extends into a front end of the charging connector 100, that is, a connection end of the charging connector 100 to the electric automobile, and the rear housing 200 is connected to the rear end of the charging connector 100.

In an optional embodiment, as shown in FIG. 4, the first end of the rear housing 200 is sleeved on an outer periphery of the connecting portion and is sealingly connected to the connecting portion. The outer portion of the first end of the rear housing 200 is connected to an inner wall of the connecting portion, and may be adhered or provided with a sealing ring for achieve a sealing objective.

In another optional embodiment, the connecting portion is tubular, and the connecting portion is sleeved on an outer periphery of the rear housing 200 and is sealingly connected to the rear housing 200. In addition to being disposed in the connecting portion, the rear housing 200 may be also disposed outside the connecting portion, and the inner wall of the rear housing 200 and the outer portion of the connecting portion are adhered or provided with the sealing ring for achieving a sealing objective.

In another optional embodiment, an end face of the connecting portion is provided with a groove, and the first end of the rear housing is inserted into and sealingly connected to the groove. The rear housing 200 may be alternatively connected to the connecting portion through plugging, the rear housing 200 is provided with the groove fitting with the edge of the connecting portion, and an adhesive may be used for sealing process after plugging.

In another optional embodiment, the first end of the rear housing 200 is provided with an internal thread or an external thread, the connecting portion is correspondingly provided with an external thread or an internal thread, and the rear housing is threadedly and sealingly connected to the connecting portion. The rear housing 200 is threadedly connected to the connecting portion, thereby allowing for more convenient and quicker assembly, disassembly, and repair, and after threadedly connected, they may be sealed by a sealing adhesive.

In an optional embodiment, a wall thickness of the rear housing 200 is 1 mm to 6 mm. If the wall thickness of the rear housing 200 is excessively small, the rear housing 200 is easy to damage, and if the wall thickness is excessively large, the rear housing 200 is excessively heavy. To look for a proper thickness of the rear housing 200, the inventor has conducted relevant experiments. Rear housings 200 with different thicknesses are selected and the other structures of the charging devices are all the same. The different rear housings 200 are placed under a hydraulic press. The hydraulic press applies force of 100 N to all of the rear housings 200 with different thicknesses. If one of the rear housings 200 is damaged, it is unqualified. A weight ratio N (%) of a charging device with a rear housing 200 of a different thickness to a charging device undergoing integral plastic injection is then taken. If N is greater than or equal to 100%, the rear housing 200 is unqualified. The test results are shown in Table 1.

**Table 1: Whether a rear housing of a different thickness is damaged and a weight ratio of the rear housing of a different thickness to a structure undergoing integral plastic injection**

| | | | | | | | | |
|---|---|---|---|---|---|---|---|---|
| Thickness (mm) | 0.8 | 1 | 2 | 3 | 4 | 5 | 6 | 6.2 |
| Whether the rear housing is damaged | Yes | No | No | No | No | No | No | No |
| N (%) | 9 | 32 | 53 | 70 | 83 | 92 | 98 | 103 |

It can be known from Table 1 that when the thickness of the rear housing 200 is less than 0.8 mm, it is damaged under pressure of the hydraulic machine. If the rear housing 200 is disposed in a vehicle, it may not bear corresponding pressure to be damaged and thus is unqualified. When the thickness of the rear housing 200 is greater than 6 mm, the weight of the rear housing 200 exceeds the weight of integral plastic injection, and therefore, the inventor sets the thickness range of the rear housing 200 to be 1 mm to 6 mm.

In an optional embodiment, a ratio of a diameter of the wire-through hole 201 to a diameter of the cable 300 is 1:0.8 to 1:1.1. In other words, the wire-through hole 201 may be thicker than the cable 300 or slightly thinner than the cable 300. When the wire-through hole 201 is thicker than the cable 300, a sealing gasket may be used for sealing. When the wire-through hole 201 is slightly thinner than the cable 300, because the surface of the cable 300 is elastic, the cable 300 is in interference fitting with the wire-through hole 201 and can achieve better sealing by a sealing adhesive. However, when a cross-sectional diameter of the cable 300 is excessively greater than that of the wire-through hole 201, it cannot be inserted into the wire-through hole 201. To look for a proper ratio of a diameter of a wire-through hole 201 to a diameter of a cable 300, the inventor has conducted experiments, selecting the same rear housings 200 and cables 300 with different thicknesses for inserting test. The cable that can be inserted into the wire-through hole 201 is qualified; otherwise, it is unqualified. The experiment results are shown in Table 2.

**Table 2: Ratio of a diameter of a wire-through hole 201 to a diameter of a cable 300**

| Ratio | 1:0.6 | 1:0.7 | 1:0.8 | 1:0.9 | 1:1 | 1:1.05 | 1:1.1 | 1:1.15 |
|---|---|---|---|---|---|---|---|---|
| Whether the cable is inserted into the wire-through hole | Yes | Yes | Yes | Yes | Yes | Yes | Yes | No |

It can be known from Table 2 that when the ratio of the diameter of the wire-through hole 201 to the diameter of the cable 300 is less than 1:1.1, the cable 300 cannot be inserted into the wire-through hole 201 and thus is unqualified. When the ratio of the diameter of the wire-through hole 201 to the diameter of the cable 300 is greater than or equal to 1:1.1, the cable 300 can be inserted into the wire-through hole 201 and thus is qualified. However, when the ratio of the diameter of the wire-through hole 201 to the diameter of the cable 300 is excessively large, sealing between the cable 300 and the wire-through hole 201 becomes difficult correspondingly. Therefore, the inventor sets the ratio of the diameter of the wire-through hole 201 to the diameter of the cable 300 to be 1:0.8 to 1:1.1.

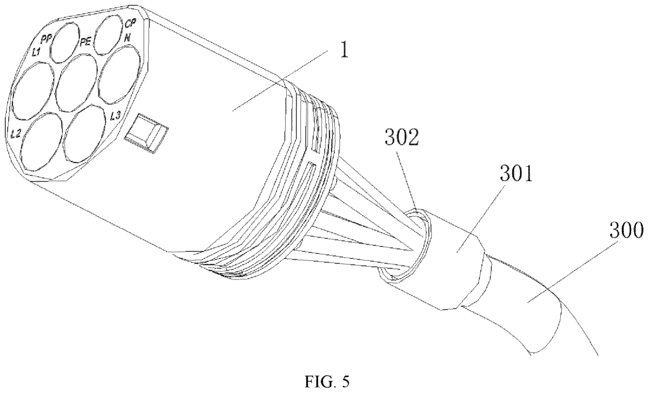

In an optional embodiment, the automobile charging device further includes a sealing ring 301. As shown in FIG. 5, the sealing ring 301 is sleeved on the cable 300, and an outer periphery of the sealing ring 301 is sealingly connected to the wire-through hole 201. As the sealing ring 301 is sleeved on the cable 300, the sealing fitting between the sealing ring 301 and the wire-through hole 201 can ensure good sealing performance.

Further, the sealing ring 301 is made of an elastic material. As shown in FIG. 5, the outer periphery of the sealing ring 301 is provided with a sealing groove 302, and the wire-through hole 201 is snap-fitted in the sealing groove 302. The wire-through hole 201 is snap-fitted in the sealing groove 302, thereby allowing for a better sealing effect and ensuring connection stability.

In an optional embodiment, the protective portion 400 wraps the rear housing 200 therein, and a first end of the protective portion 400 abuts against an end face of the connecting portion. The rear housing 200 abuts against and is sealed with the connecting portion, such that when the rear housing 200 is subjected to plastic injection, the injected plastic material does not enter the charging connector 100 due to huge plastic injection force.

In an optional embodiment, the protective portion 400 wraps the rear housing 200 therein, and a first end of the protective portion 400 wraps at least part of the connecting portion therein. In other words, the protective portion 400 completely wraps the rear housing 200, and its first end and the outer portion of the connecting portion are adhered or provided with a sealing gasket to achieve a good sealing effect.

In an optional embodiment, a second end of the protective portion 400 is provided with an outward extending portion 401, and the outward extending portion 401 covers the wire-through hole 201 and an outer periphery of part of the cable 300. The outward extending portion 401 is provided with a first through hole, the protective portion 400 is provided with a second through hole, the first through hole communicates with the second through hole, and the cable 300 sequentially passes through the first through hole and the second through hole and then enters the rear housing 200. The second through hole is in interference fitting with the cable 300, achieving water-proof sealing insertion of the cable 300. The first through hole may be in interference fitting with the cable 300 and then a sealing adhesive is used to enhance the water-proof sealing performance. Through such arrangement, the dust cannot enter the rear housing 200, and under normal pressure and temperature, temporarily immersing the protective portion 400 in 1-meter deep water does not cause harmful effects to the charging device.

The arrangement of the outward extending portion 401 in this embodiment can prevent the cable 300 from obviously bending due to gravity, thus avoiding damage to the cable 300. The outward extending portion 401 may extend linearly or have a small bending angle. From one end connected to the protective portion 400 to a free end, the cross-sectional area of the outward extending portion 401 may decrease gradually, that is, the outward extending portion 401 becomes thinner gradually. The cross-sectional area of the outward extending portion 401 may remain unchanged, that is, the thickness of the outward extending portion 401 is consistent.

In an optional embodiment, a second end of the protective portion 400 is provided with an outward extending portion 401, and the outward extending portion 401 covers the wire-through hole 201, a sealing ring 301, and an outer periphery of part of the cable 300. In other words, in the structure of the sealing ring 301, the outward extending portion 401 further covers both the sealing ring 301 and part of the cable 300, enabling the charging device to be a complete sealed body.

In an optional embodiment, the protective portion 400 is made of an elastic material and water-proof material. In a specific embodiment, the protective portion 400 may be made of a rubber that is elastic, water-proof, and lightweight, which is conducive to control over weight of the entire automobile charging device and low costs.

In a specific embodiment, the protective portion 400 may be molded using an elastic material by plastic injection, to wrap the cable 300, the rear housing 200, and wire-through hole 201 therein, so as to achieve water-proof sealing on the rear portion of the automobile charging device.

Based on the foregoing description, the outward extending portion 401 may be also molded using an elastic material by plastic injection and integrated with the protective portion 400.

Specifically, the elastic material is one or more selected from silicone rubber, ethylene propylene rubber, chloroprene rubber, natural rubber, styrene butadiene rubber, acrylonitrile-butadiene rubber, polybutadiene rubber, isoprene rubber, ethylene propylene rubber, chloroprene rubber, butyl rubber, fluoro rubber, polyurethane rubber, polyacrylate rubber, chlorosulfonated polyethylene rubber, epichloro-hydrin rubber, chlorinated polyethylene rubber, chlorosulfur rubber, styrene-butadiene rubber, butadiene rubber, hydrogenated acrylonitrile butadiene rubber, and polysulfide rubber.

In an optional embodiment, a wall thickness of the protective portion 400 is 1 mm to 6 mm. If the wall thickness of the protective portion 400 is excessively small, the protective portion 400 is easy to damage, and if the wall thickness is excessively large, the protective portion 400 is excessively heavy. To look for a proper thickness of the protective portion 400, the inventor has conducted relevant experiments. Protective portions 400 with different thicknesses are selected and the other structures of the charging devices are all the same. The different protective portions 400 are placed under a hydraulic press. The hydraulic press applies force of 100 N to all of the protective portions 400 with different thicknesses. If one of the protective portions 400 is damaged, it is unqualified. A weight ratio N (%) of a charging device with a protective portion 400 of a different thickness to a charging device undergoing integral plastic injection is then taken. If N is greater than or equal to 100%, the protective portion 400 is unqualified. The test results are shown in Table 3.

**Table 3: Whether a protective portion of a different thickness is damaged and a weight ratio of the protective portion of a different thickness to a structure undergoing integral plastic injection**

| | | | | | | | | |
|---|---|---|---|---|---|---|---|---|
| Thickness (mm) | 0.8 | 1 | 2 | 3 | 4 | 5 | 6 | 6.2 |
| Whether the protective portion is damaged | Yes | No | No | No | No | No | No | No |
| N (%) | 10 | 34 | 56 | 72 | 83 | 91 | 98 | 104 |

It can be known from Table 3 that when the thickness of the protective portion 400 is less than 0.8 mm, it is damaged under pressure of the hydraulic machine. If the protective portion 400 is disposed in a vehicle, it may not bear corresponding pressure to be damaged and thus is unqualified. When the thickness of the protective portion 400 is greater than 6 mm, the weight of the protective portion 400 exceeds the weight of integral plastic injection, and therefore, the inventor sets the thickness range of the protective portion 400 to be 1 mm to 6 mm.

In an optional embodiment, the rear housing 200 is a tubular housing, one end of the tubular housing is sealingly connected to an end face of the charging connector 100, and the other end of the tubular housing is for the cable 300 to pass through and sealingly connected to the cable 300. In an optional embodiment, a radial direction outer diameter of the tubular housing is smaller than a radial direction outer diameter of the charging connector 100. Thus, when the rear housing 200 is connected to the charging connector 100, the charging connector 100 can be sleeved on the rear housing 200, allowing for easier sealing connection therebetween. Correspondingly, the outer diameter of the protective portion 400 may be selected to be greater than the outer diameter of the charging connector 100, such that the protective portion 400 can be sleeved on the outer portion of the charging connector 100 for connection.

In an exemplary embodiment, the protective portion 400 is integrally molded with the charging connector 100, the rear housing 200, and the cable 300 by plastic injection.

In an optional embodiment, the cross-sectional shape inside the outward extending portion 401 is circle, ellipse, square, or polygon. A different cross-sectional shape may be selected based on the cross-sectional shape of the cable 300 or a corresponding connection manner.

During specific implementation, the rear housing 200 is connected to the charging connector 100 by one or more selected from adhesive connection, magnetic suction connection, snap connection, plug-in connection, latch connection, threaded connection, and rivet connection.

In a first feasible technical solution, an adhesive structure may be adopted. For example, each surfaces of the rear housing 200 and the charging connector 100 may be respectively provided with an adhesive layer, and the two are fixedly adhered to each other.

In a second feasible technical solution, a magnetic suction structure may be adopted. For example, the rear housing 200 and the charging connector 100 are both provided with a magnetic suction member and then sealed, allowing for convenient and quick connection.

In a third feasible technical solution, a plug-in structure may be adopted. For example, the rear housing 200 may be provided with a bolt and the charging connector 100 is provided with a keyway slotting, and the bolt is plugged into the keyway slotting and fixedly connected.

In a fourth feasible technical solution, a snap structure may be adopted. For example, the rear housing 200 is provided with a fastener, the charging connector 100 is provided with a clamping groove, and the fastener and the clamping groove are assembled and fixedly connected.

In a fifth feasible technical solution, a threadedly connected structure may be adopted. The threadedly connected structure includes a screw bolt and a screw nut. The screw bolt is fixed to the charging connector 100, and the rear housing 200 is provided with a screw hole. After passing through the screw hole, the screw bolt is fixedly connected to the screw nut.

In a sixth feasible technical solution, a rivet structure may be adopted, including a rivet and fixed holes. The fixed holes are provided in the rear housing 200 and the charging connector 100. The rivet passing through the fixed holes and the end of the rivet through the fixed holes is deformed, thus fixedly connecting the rear housing 200 to the charging connector 100.

In an optional embodiment, the rear housing 200 is connected to the charging connector 100 by welding. The welding is one or more selected from electric-resistance welding, friction welding, ultrasonic welding, arc welding, laser welding, electron beam welding, pressure diffusion welding, and magnetic induction welding.

The electric-resistance welding means a powerful current is enabled to pass through a contact point between an electrode and a workpiece, generating a heat energy due to contact resistance for welding.

The friction welding means a heat energy generated by friction at the contact surfaces of workpieces is used as a heat source, causing the workpieces to undergo plastic deformation under pressure for welding.

The ultrasonic welding means a high-frequency vibration wave is enabled to transmit to surfaces of two objects to be welded, and under pressure, the surfaces of the two objects friction with each other to cause fusion between the molecular layers.

The arc welding means an electric arc serves as a heat source, according to the physical phenomenon of air discharge, converting an electrical energy into a thermal and mechanical energy both of which are required for welding, thus connecting metals. The main methods include shielded metal arc welding, submerged arc welding, gas shielded welding, and the like.

The laser welding means a laser beam with a high energy is used as a heat source for efficient and precise welding.

The electron beam welding means an accelerated and focused electron beam is used to bombard the welding surfaces placed in a vacuum environment or non-vacuum environment, causing the workpieces to melt and achieve welding.

The pressure diffusion welding means pressure is applied to members to be welded, enabling joint surfaces to be in tight contact and undergo some plastic deformation, thus completing welding.

The magnetic induction welding means two workpieces to be welded undergo instant high-speed collision under action of a strong pulse magnetic field. In the surface layers of the materials, action of a quite high-pressure wave causes the atoms of the two materials to meet within atomic distances, thereby forming a stable metallurgical bond at an interface. This is one type of solid-state cold-welding, allowing conductive metals with similar or dissimilar properties to be welded together.

In an optional embodiment, there are a plurality of wiring terminals 101; the plurality of wiring terminals 101 are provided radially outward from the middle of the charging connector 100. The charging connector 100 is provided with a plurality of mounting holes corresponding to the provision positions of the wiring terminals 101, and the wiring terminals 101 are mounted in the mounting holes. For example, there may be six wiring terminals 101 of which, one is in the middle of the charging connector 100, and the other fix surround the wiring terminal 101 in the middle.

At least part of the wiring terminal 101 is provided with a plating layer; the plating layer can improve the corrosion resistance of the wiring terminal 101, improve conductivity, increase the number of insertions, and better prolong the service life of the wiring terminal 101.

The plating layer may be formed using methods such as electroplating, chemical plating, magnetron sputtering, or vacuum deposition.

The electroplating method is a process where according to the principle of electrolysis, a thin layer of another metal or alloy is applied onto the surface of a metal.

The chemical plating method is a process where under the catalytic action of the metal, metal deposition occurs by a controlled oxidation-reduction reaction.

The magnetron sputtering method: through interaction between a magnetic field and an electric field, electrons are enabled to spiral near a target surface, thereby increasing the probability of electron collision with argon gas to produce ions. The generated ions collide with the target surface under the action of the electric field, thereby sputtering a target material.

The vacuum deposition method: under a vacuum condition, various metal film and non-metal film are deposited on the surfaces of parts by the manner of evaporation, sputtering, or the like.

The plating layer is made of one or more selected from gold, silver, nickel, tin, tin-lead alloy, zinc, silver-antimony alloy, palladium, palladium-nickel alloy, graphite silver, graphene silver, and silver-gold-zirconium alloy. Copper or aluminum, as an active metal, undergoes oxidation reaction with oxygen and water during use. Therefore, one or more inactive metals are needed as a plating layer to prolong the service life of the tubular terminal. Additionally, for metal contact points that require frequent plugging, a good wear-resistant metal is required as a plating layer, which can greatly prolong the service life of the contact points. Furthermore, the contact points require good electric conducting property. The electric conducting property and stability of the foregoing metals are superior to those of copper or copper alloys, and aluminum or aluminum alloys, allowing the tubular terminal to achieve better electrical performance and a longer service life.

In some exemplary implementations, the wiring terminal 101 is made of a copper alloy that contains the substance tellurium, allowing the wiring terminal 101 to have good conductivity and machinability, ensuring electrical performance and improving processability. Additionally, the elasticity of the tellurium copper alloy is also good.

Exemplarily, in the tellurium copper alloy, a tellurium percentage is 0.1% to 5%, further exemplarily 0.2% to 1.2%.

The inventor selects 10 plug-in terminals in the same shape and with the same expansion joint width for test. The terminals are all made of the tellurium copper alloy and have tellurium percentages: 0.05%, 0.1%, 0.2%, 1%, 1.2%, 1.8%, 3%, 5%, 6%, and 7%, respectively. The test results are shown in Table 4.

**Table 4: Effects of tellurium copper alloys with different tellurium percentages on conductivity**

| | | | | | | | | | | |
|---|---|---|---|---|---|---|---|---|---|---|
| Tellurium percentage (%) | 0.05 | 0.1 | 0.2 | 1 | 1.2 | 1.8 | 3 | 5 | 6 | 7 |
| Conductivity (%) | 98.8 | 99.5 | 99.6 | 99.7 | 99.8 | 99.6 | 99.4 | 99.1 | 98.7 | 98.5 |

It can be known from Table 4, when the tellurium percentage is less than 0.1% or greater than 5%, the conductivity of the wiring terminal 101 significantly decreases and the actual requirement cannot be met. When the tellurium percentage is greater than or equal to 0.2% and less than or equal to 1.2%, the conductivity of the wiring terminal 101 is optimal. Therefore, the inventor selects the tellurium copper alloy with a tellurium percentage of 0.1% to 5%. In the most ideal scenario, the tellurium copper alloy with a tellurium percentage of 0.2% to 1.2% is selected.

In some embodiments, the rear housing 200 may be provided with a positioning portion 202. The positioning portion 202 may be flat shape or other shapes. Correspondingly, a positioning structure fitting with the positioning portion 202 is provided in the charging connector 100 to limit a relative position of the rear housing 200 connected to the charging connector 100.

The embodiments of the present disclosure further provide an automobile charging pile, including the automobile charging device according to the foregoing embodiments. The automobile charging pile is set up on the ground or another foundation, and a cable is led out from the automobile charging pile into the inner housing. In the same region such as a parking lot, a plurality of automobile charging piles may be provided.

The present disclosure further provides a preparation method of an automobile charging device, including the following steps:
Step S100: Obtaining a charging connector 100, a rear housing 200, and a wiring terminal 101, where one end of the charging connector 100 is a connecting portion, and the rear housing 200 is provided with a wire-through hole 201.
Step S200: Obtaining a cable 300 and passing the cable 300 through the wire-through hole 201.
Step S300: Connecting a conductive portion of the cable 300 to the wiring terminal 101 by crimping or welding.
Step S400: Assembling the wiring terminal 101 with the charging connector 100.
Step S500: Connecting the first end of the rear housing 200 to the connecting portion.
Step S600: Placing the assembled charging connector 100, rear housing 200, and cable 300 in a plastic injection mold, and forming the protective portion 400 by integrated injection molding.

Further, before the step S200, the method further includes step S150: Obtaining the cable 300, sleeving the cable 300 with the sealing ring 301, and providing a sealing groove 302 on the sealing ring 301.

Further, after the step S200 and before the step S300, the method further includes step S250: Snap-fitting the wire-through hole 201 in the sealing groove 302.

The following clearly and completely describes the technical solutions in the embodiments of the present disclosure with reference to the drawings in the embodiments of the present disclosure.

In a first step, a charging connector 100, a rear housing 200, and a wiring terminal 101 are prepared. One end of the charging connector 100 is a connecting portion which is connected to the rear housing 200, the other end is an insertion portion which is connected to a charging socket, and the rear housing 200 is provided with a wire-through hole 201.

In a second step, a cable 300 and a sealing ring 301 are prepared based on requirements. A ring of sealing groove 302 is provided on a side face of the sealing ring 301, the sealing groove 302 fits with the wire-through hole 201 of the rear housing 200 for insertion, the sealing ring 301 is sleeved on the cable 300, and the cable 300 passes through the wire-through hole 201.

In a third step, a conductive portion of the cable 300, that is, a core in the cable 300, is connected to the wiring terminal 101 in one-to-one correspondence by crimping or welding.

In a fourth step, the wiring terminal 101 is assembled at a preset position in the charging connector 100.

In a fifth step, a first end of the rear housing 200 is connected to a connecting portion. The rear housing 200 may be provided in the connecting portion, and the outer portion of the rear housing 200 is adhered to an inner wall of the connecting portion.

In a sixth step, the assembled charging connector 100, rear housing 200, and cable 300 are placed in a plastic injection mold, and forming the protective portion 400 by integrated injection molding.

Those skilled in the art should understand that the above descriptions are only specific implementations of the present disclosure, but the protection scope of the present disclosure is not limited thereto. Clearly, those skilled in the art may make various modifications and variations to the present disclosure without departing from the spirit and scope of the present disclosure Therefore, if these modifications and variations of the present disclosure fall within the scope of the claims and equivalent technologies of the present disclosure, the present disclosure also intends to include these modifications and variations.

## Claims

1. An automobile charging device, comprising a charging connector, a rear housing, and a cable, wherein the charging connector comprises a connecting portion, a first end of the rear housing is connected to the connecting portion, a second end of the rear housing is provided with a wire-through hole, the cable enters the rear housing through the wire-through hole and is connected to the charging connector, a protective portion is disposed outside the rear housing, and the protective portion at least wraps the rear housing therein.

2. The automobile charging device according to claim 1, wherein at least one wiring terminal is disposed in the charging connector, and the cable is electrically connected to the wiring terminal.

3. The automobile charging device according to claim 1, wherein the first end of the rear housing is sleeved on an outer periphery of the connecting portion and is sealingly connected to the connecting portion.

4. The automobile charging device according to claim 1, wherein the connecting portion is tubular, and the connecting portion is sleeved on an outer periphery of the rear housing and is sealingly connected to the rear housing.

5. The automobile charging device according to claim 1, wherein an end face of the connecting portion is provided with a groove, and the first end of the rear housing is inserted into and sealingly connected to the groove.

6. The automobile charging device according to claim 1, wherein the first end of the rear housing is provided with an internal thread or an external thread, the connecting portion is correspondingly provided with an external thread or an internal thread, and the rear housing is threadedly and sealingly connected to the connecting portion.

7. The automobile charging device according to claim 1, wherein a wall thickness of the rear housing is 1 mm to 6 mm.

8. The automobile charging device according to claim 1, wherein a ratio of a diameter of the wire-through hole to a diameter of the cable is 1:0.8 to 1:1.

9. The automobile charging device according to claim 1, further comprising a sealing ring, wherein the sealing ring is sleeved on the cable, and an outer periphery of the sealing ring is sealingly connected to the wire-through hole.

10. The automobile charging device according to claim 9, wherein the sealing ring is made of an elastic material, the outer periphery of the sealing ring is provided with a sealing groove, and the wire-through hole is snap-fitted in the sealing groove.

11. The automobile charging device according to claim 1, wherein the protective portion wraps the rear housing therein, and a first end of the protective portion abuts against an end face of the connecting portion.

12. The automobile charging device according to claim 1, wherein the protective portion wraps the rear housing therein, and a first end of the protective portion wraps at least part of the connecting portion therein.

13. The automobile charging device according to claim 1, wherein a second end of the protective portion is provided with an outward extending portion, and the outward extending portion covers the wire-through hole and an outer periphery of part of the cable.

14. The automobile charging device according to claim 9, wherein a second end of the protective portion is provided with an outward extending portion, and the outward extending portion covers the wire-through hole, the sealing ring, and an outer periphery of part of the cable.

15. The automobile charging device according to claim 1, wherein the protective portion is made of an elastic material.

16. The automobile charging device according to claim 1, wherein a wall thickness of the protective portion is 1 mm to 6 mm.

17. A preparation method of the automobile charging device according to any one of claims 1 to 16, comprising:
step S 100: obtaining the charging connector, the rear housing, and the wiring terminal;
step S200: obtaining the cable and passing the cable through the wire-through hole;
step S300: connecting a conductive portion of the cable to the wiring terminal by crimping or welding;
step S400: assembling the wiring terminal with the charging connector;
step S500: connecting the first end of the rear housing to the connecting portion; and
step S600: placing the assembled charging connector, rear housing, and cable in a plastic injection mold, and forming the protective portion by integrated injection molding.

18. The preparation method of the automobile charging device according to claim 17, before the step S200, further comprising step S150: obtaining the cable and sleeving the cable with the sealing ring.

19. The preparation method of the automobile charging device according to claim 18, after the step S200 and before the step S300, further comprising step S250: snap-fitting the wire-through hole in the sealing groove of the sealing ring.
